# EUROPÄISCHE PATENTSCHRIFT

(11) **EP 4 033 255 B1**
(45) Veröffentlichungstag und Bekanntmachung des Hinweises auf die Patenterteilung: **21.05.2025**
(21) Anmeldenummer: 22152884.7
(22) Anmeldetag: 24.01.2022
(51) Int. Cl.: G01P 21/02, G01P 3/487, B62J 45/412

(54) **VERFAHREN ZUM BEEINFLUSSEN EINES ERMITTELNS EINER GESCHWINDIGKEIT EINES FAHRRADS**
METHOD FOR CONTROLLING THE DETERMINATION OF A SPEED OF A BICYCLE
PROCÉDÉ D'INFLUENCE D'UNE DÉTERMINATION D'UNE VITESSE D'UNE BICYCLETTE

(30) Priorität: 25.01.2021 DE 102021200622
(43) Veröffentlichungstag der Anmeldung: 27.07.2022
(73) Patentinhaber: Robert Bosch GmbH, 70442 Stuttgart (DE)
(72) Erfinder: Stegmaier, Juergen, 72827 Wannweil (DE); Dackermann, Tim, 72074 Tuebingen (DE)

(56) Entgegenhaltungen:
- DE-A1- 102013 225 312
- DE-A1- 102017 212 903
- US-A1- 2010 060 264
- US-A1- 2013 249 535

## Beschreibung

### Technisches Gebiet

Die Erfindung betrifft ein Verfahren zum Beeinflussen eines Ermittelns einer Geschwindigkeit eines Fahrrads mit zumindest zwei Rädern, insbesondere eines Pedelecs.

Die Erfindung betrifft weiter ein System zum Beeinflussen eines Ermittelns einer Geschwindigkeit eines Fahrrads mit zumindest zwei Rädern, insbesondere eines Pedelecs.

Die Erfindung betrifft weiter eine Beeinflussungsvorrichtung zum Beeinflussen eines Ermittelns einer Geschwindigkeit eines Fahrrads mit zumindest zwei Rädern, insbesondere eines Pedelecs, insbesondere zur Festlegung an dem Fahrrad.

Die Erfindung betrifft darüber hinaus ein Fahrrad mit einer Beeinflussungsvorrichtung.

### Stand der Technik

Obwohl allgemein auf beliebige Fahrräder, insbesondere mit zwei oder drei Rädern, anwendbar, wird die vorliegende Erfindung in Bezug auf Fahrräder in Form von Pedelecs beschrieben.

Es ist bei Pedelecs bekannt geworden, zur Geschwindigkeitsmessung einen pulsbasierten Sensor, kurz Pulssensor, am Hinterrad einzusetzen. Dieser liefert einen Puls pro Radumdrehung auf dessen Basis mittels des Radumfangs eine Geschwindigkeit berechnet werden kann. Die Geschwindigkeit kann dann aus dem mathematischen Zusammenhang zwischen dem Zeitabstand zweier aufeinanderfolgender Pulse sowie dem Reifenumfang berechnet werden. Dieses Signal wird in bisher bekannter Weise unter anderem dazu eingesetzt, die Fahrer-Unterstützung ab einer gewissen Geschwindigkeit, beispielsweise 25 km/h, abzuregeln. Zur Überprüfung der Pedelec-Funktionen, beispielsweise nach einer Reparatur oder dergleichen, kann es erforderlich sein, die Geschwindigkeit des Pedelecs - abhängig oder unabhängig von der tatsächlichen Fahrgeschwindigkeit - temporär anzupassen. Hierzu ist es bekannt geworden, in aufwendiger Weise entweder die Software zur Geschwindigkeitsermittlung temporär anzupassen oder auch die vom Pedelec unabhängige Einheit zur Anpassung der Eingangssignale des Pulssensors. Hierzu ist es weiterhin bekannt geworden, eine elektronische Schaltung zwischen Ausgang des Sensors und der Pedelec-Antriebseinheit oder auch auf den Sensor direkt aufgesetzt, anzuordnen.

Die DE 10 2017 212903 A1 beschreibt die Überwachung des Bewegungsverhaltens eines Fahrrads wobei mindestens ein Permanentmagnet an einem der Räder angeordnet ist, der ein zeitlich variierendes Magnetfeld erzeugt, welches zur Ermittlung der Geschwindigkeit von einer Auswertungseinrichtung analysiert wird.

Aus der US 2013/249535 A1 ist eine Sensoranordnung zur Bestimmung der Drehzahl einer Welle, z.B. einer Förderanlage, und zur Überwachung von Geschwindigkeitsschwankungen oder Geschwindigkeitsüberschreitungen, bekannt. Dabei kann das magnetische Feld einer Magnetspule temporär derart verändert werden, dass die Auswerteschaltung auf Grundlage der Sensorsignale eine geringere oder höhere Geschwindigkeit als die tatsächliche Geschwindigkeit ausgibt. Dies erfolgt insbesondere dadurch, dass vom rotierenden Objekt hervorgerufenen Impulse maskiert bzw. unsichtbar gemacht und durch künstlich erzeugte Impulse mit einer vorgegebenen Frequenz ersetzt werden.

### Offenbarung der Erfindung

n einer Ausführungsform stellt die vorliegende Erfindung ein Verfahren zum Beeinflussen eines Ermittelns einer Geschwindigkeit eines Fahrrads mit zumindest zwei Rädern, insbesondere eines Pedelecs, gemäß Anspruch 1 bereit.
insbesondere wobei zumindest die Felderzeugungseinheit an einem beweglichen, insbesondere rotierenden Bauteil des Fahrrads, vorzugsweise einem Rad

In einer weiteren Ausführungsform stellt die vorliegende Erfindung eine Beeinflussungsvorrichtung zum Beeinflussen eines Ermittelns einer Geschwindigkeit eines Fahrrads mit zumindest zwei Rädern, insbesondere eines Pedelecs gemäß Anspruch 9 bereit.

In einer weiteren Ausführungsform stellt die vorliegende Erfindung ein Fahrrad gemäß Anspruch 10 bereit.

Mit anderen Worten ermöglichen Ausführungsformen der Erfindung eine Anpassung eines gemessenen Signals auf dem physikalischen Wirkpfad hinsichtlich der Geschwindigkeitsvorgabe unabhängig von der tatsächlichen Fahrgeschwindigkeit des Fahrrads, insbesondere des Pedelecs.

Einer der damit erzielten Vorteile ist, dass auch bei Messung von kontinuierlichen Werten von einem Sensor - im Gegensatz zu dem bisher bekannten Reed-Sensor mit Reed-Signal, welches nur die Werte 0 und 1 aufweist - ein entsprechend gemessenes Signal zur Ermittlung der Geschwindigkeit beeinflusst werden kann.

Weitere Merkmale, Vorteile und weitere Ausführungsformen der Erfindung sind im Folgenden beschrieben oder werden dadurch offenbar.

Die Felderzeugungseinheit wird an einem beweglichen, insbesondere rotierenden Bauteil des Fahrrads angeordnet. Durch die Anordnung auf einem insbesondere rotierenden Bauteil ist es ausreichend, ein eindimensionales elektrisches und/oder magnetisches Feld zu erzeugen, um eine genaue Geschwindigkeitsermittlung auf Basis eines Signals des detektierten Feldes zu ermöglichen.

Gemäß einer weiteren Weiterbildung der Erfindung wird die Geschwindigkeit des Fahrrads durch die Beweglichkeit, insbesondere die Rotation des Bauteils zumindest mittelbar repräsentiert. Vorteil ist eine zuverlässige Ermittlung einer Geschwindigkeit des Fahrrads.

Gemäß einer weiteren Weiterbildung der Erfindung steuert die Felderzeugungseinheit das zumindest eine Felderzeugungselement derart an, sodass zumindest temporär, insbesondere regelmäßig ein zeitlich unveränderliches Magnetfeld, insbesondere das eines Permanentmagneten bereitgestellt wird. Vorteil hiervon ist eine einfache Emulation eines Magnetfeldes, welches beispielsweise durch einen Permanentmagneten erzeugt wird.

Gemäß einer weiteren Weiterbildung der Erfindung wird die Felderzeugungseinheit mit zumindest zwei Felderzeugungselementen versehen, die insbesondere an dem beweglichen, insbesondere rotierenden Bauteil des Fahrrads angeordnet werden. Vorteil hiervon ist, dass damit auf besonders flexible Weise die Ermittlung der Geschwindigkeit beeinflussbar ist.

Gemäß einer weiteren Weiterbildung der Erfindung wird ein Felderzeugungselement derart angesteuert, sodass eine ermittelte Geschwindigkeit niedriger ist als diejenige, die bei Bereitstellung eines Feldes eines zeitlich unveränderlichen Magnetfeldes durch das Felderzeugungselement ermittelt wird. Damit kann auf kostengünstige Weise die ermittelte Geschwindigkeit abgesenkt werden.

Gemäß einer weiteren Weiterbildung der Erfindung werden mehrere Felderzeugungselemente angeordnet und diese werden derart angesteuert, sodass eine ermittelte Geschwindigkeit höher ist als diejenige, die bei Bereitstellung eines Feldes eines zeitlich unveränderlichen Magnetfeldes durch lediglich eines der mehreren Felderzeugungselemente ermittelt wird. Damit kann auf einfache Weise die ermittelte Geschwindigkeit mittels der Felderzeugungseinheit erhöht werden.

Gemäß einer weiteren Weiterbildung der Erfindung werden die mehreren Felderzeugungselemente in regelmäßiger Weise an einem beweglichen, insbesondere rotierenden Bauteil des Fahrrads angeordnet. Vorteil hiervon ist die zuverlässige und insbesondere einfache Bereitstellung eines Signals zur Emulation einer konstanten Geschwindigkeit des Fahrrads.

Gemäß einer weiteren Weiterbildung der Erfindung steuert die Felderzeugungseinheit das zumindest eine Felderzeugungselement derart an, sodass eine Änderung des Feldes zu einem Zeitpunkt, bereitgestellt durch das zumindest eine Felderzeugungselement, außerhalb der Reichweite des zumindest einen Sensors erfolgt. Damit wird eine besonders zuverlässige Emulation einer Geschwindigkeit ermöglicht und Fehlmessungen durch den zumindest einen Sensor vermieden.

Gemäß einer weiteren Weiterbildung der Erfindung wird eine Messeinrichtung zur Bestimmung des Zeitpunkts angeordnet, insbesondere eine Inertialmesseinheit, eine Erdmagnetfeldmesseinheit, ein Reed-Schalter mit an einem starren Bauteil des Fahrrads angeordnetem Magneten und/oder eine GPS-Einheit. Dies ermöglicht eine automatische und gleichzeitig zuverlässige Anpassung des beziehungsweise der jeweiligen Zeitpunkte.

Weitere wichtige Merkmale und Vorteile der Erfindung ergeben sich aus den Unteransprüchen, aus den Zeichnungen und aus dazugehöriger Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungen und Ausführungsformen der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile oder Elemente beziehen.

### Kurze Beschreibung der Zeichnungen

Dabei zeigt in schematischer Form
- Fig. 1: Schritte eines Verfahrens gemäß einer Ausführungsform der vorliegenden Erfindung;
- Fig. 2: ein System gemäß einer Ausführungsform der vorliegenden Erfindung;
- Fig. 3: ein Fahrrad gemäß einer Ausführungsform der vorliegenden Erfindung;
und
- Fig. 4: eine Prinzipdarstellung von Teilen eines Verfahrens und einer Vorrichtung gemäß einer Ausführungsform der vorliegenden Erfindung.

### Ausführungsformen der Erfindung

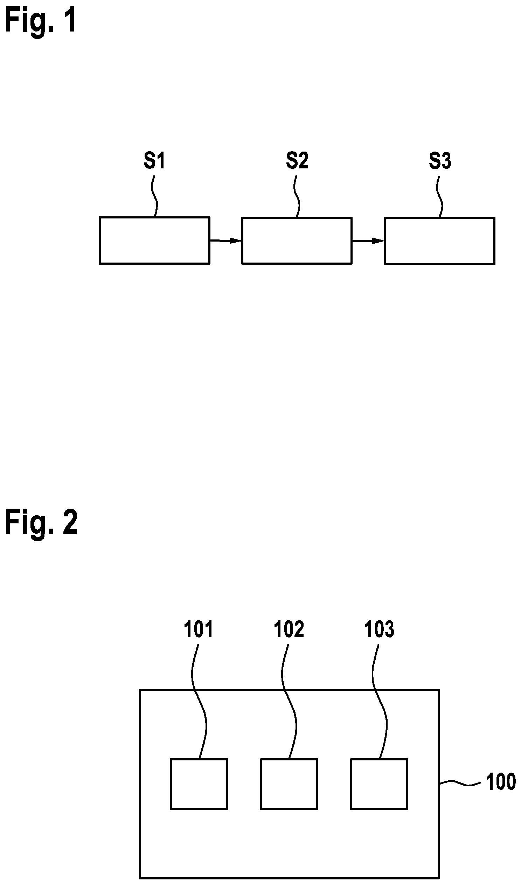

Figur 1 zeigt in schematischer Form Schritte eines Verfahrens gemäß einer Ausführungsform der vorliegenden Erfindung.

Im Detail zeigt Figur 1 Schritte eines Verfahrens zum Beeinflussen eines Ermittelns einer Geschwindigkeit eines Fahrrads mit zumindest zwei Rädern, insbesondere eines Pedelecs.

Das Verfahren umfasst dabei die folgenden Schritte:
- Bereitstellen S1 eines zeitlich und/oder räumlich variierenden elektrischen und/oder magnetischen Feldes durch eine Felderzeugungseinheit an zumindest einer Detektionsposition an einem starren Bauteil des Fahrrads zur Ermittlung der Geschwindigkeit des Fahrrads, wobei die Felderzeugungseinheit zumindest ein Felderzeugungselement aufweist, dessen bereitgestelltes elektrisches und/oder magnetisches Feld veränderbar ist,
- Detektieren S2 des zumindest in einer Raumrichtung sich verändernden elektrischen und/oder magnetischen Feldes an der zumindest einen Detektionsposition mittels einer Detektionseinrichtung am Fahrrad, und
- Ermitteln S3 der Geschwindigkeit des Fahrrads basierend zumindest auf dem detektierten Feld.

Figur 2 zeigt in schematischer Form ein System gemäß einer Ausführungsform der vorliegenden Erfindung.

Im Detail zeigt Figur 2 in schematischer Form ein System 100 zum Beeinflussen eines Ermittelns einer Geschwindigkeit eines Fahrrads mit zumindest zwei Rädern, insbesondere eines Pedelecs.

Das System 100 umfasst
- eine Felderzeugungseinheit 101, die ausgebildet ist, ein zeitlich und/oder räumlich variierendes elektrisches und/oder magnetisches Feld an zumindest einer Detektionsposition an einem starren Bauteil des Fahrrads zur Ermittlung der Geschwindigkeit des Fahrrads bereitzustellen, wobei die Felderzeugungseinheit 101 zumindest ein Felderzeugungselement aufweist, dessen bereitgestelltes elektrisches und/oder magnetisches Feld veränderbar und so ansteuerbar ist, dass eine von der tatsächlichen Geschwindigkeit des Fahrrads abweichende Geschwindigkeit ermittelt wird,
- eine Detektionseinrichtung 102, die zum Detektieren eines sich verändernden elektrischen und/oder magnetischen Feldes an der zumindest einen Detektionsposition mittels zumindest eines Sensors am Fahrrad ausgebildet ist, und
- eine Ermittlungseinrichtung 103, die zum Ermitteln der Geschwindigkeit des Fahrrads basierend zumindest auf dem detektierten Feld ausgebildet ist.

Zumindest die Felderzeugungseinheit 101 kann dabei an einem beweglichen, insbesondere rotierenden Bauteil des Fahrrads 1, vorzugsweise an einem Rad 2, 7 angeordnet sein.

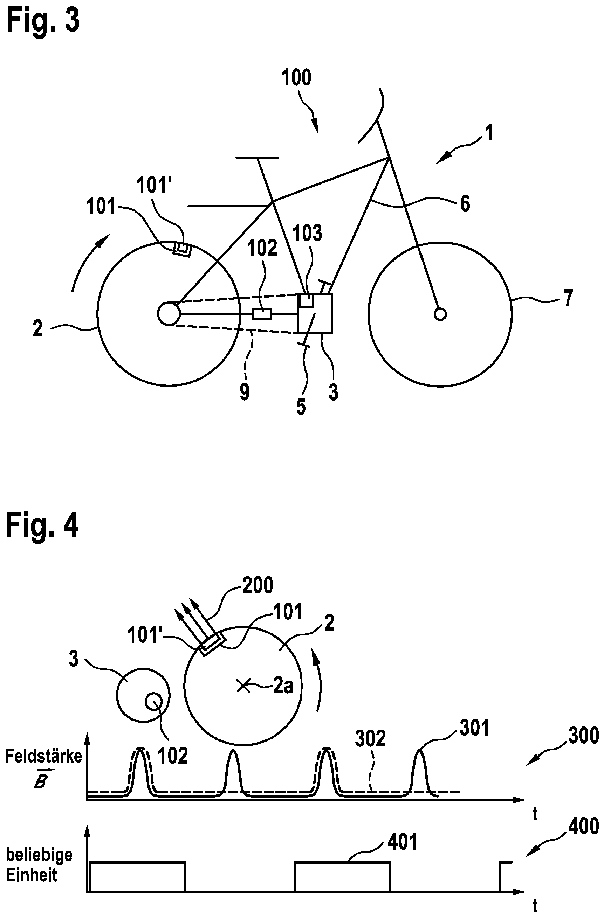

Figur 3 zeigt in schematischer Form ein Fahrrad gemäß einer Ausführungsform der vorliegenden Erfindung und Figur 4 eine Prinzipdarstellung von Teilen eines Verfahrens und einer Vorrichtung gemäß einer Ausführungsform der vorliegenden Erfindung.

Im Detail zeigt Figur 3 ein Fahrrad 1 mit einem Hinterrad 2 und einem Vorderrad 7. Mittels einer Antriebseinheit 3, die am Rahmen 6 des Fahrrads 1 angeordnet ist und sowohl eine Motorunterstützung bereitstellen kann als auch eine Pedaleinheit mit Pedalen 5 zum manuellen Antrieb umfasst, kann das Hinterrad 2 über eine Kette 9 angetrieben werden. In dem Hinterrad 2 ist eine Felderzeugungseinheit 101 mit zumindest einem Felderzeugungselement 101' angeordnet. Weiterhin ist im Bereich zwischen Antriebseinheit 3 und Hinterrad 2 am Rahmen 6 eine Detektionseinrichtung 102 in Form zumindest eines Sensors angeordnet. Der Sensor kann dabei das durch die Drehung des Hinterrads 2 durch die Felderzeugungseinheit 101 sich am Ort des Sensors verändernde magnetische Feld zumindest eindimensional, vorzugsweise zwei- oder dreidimensional messen. Weiterhin umfasst das Fahrrad 1 eine Ermittlungseinrichtung 103, die zum Ermitteln der Geschwindigkeit des Fahrrads ausgebildet ist. Hierzu ist diese mit der Detektionseinrichtung 102 verbunden und ermittelt aus den von der Detektionseinrichtung 102 erhaltenen Signalen des detektierten Magnetfelds die entsprechende Geschwindigkeit des Fahrrads 1.

Figur 4 zeigt in der oberen Hälfte schematisch ein Hinterrad 2 eines Pedelecs, welches sich um eine Achse 2a dreht. An dem Hinterrad 2 ist im Bereich der radialen Außenseite ein Felderzeugungselement 101' angeordnet, welches durch eine hier nicht dargestellte Felderzeugungseinheit 101 angesteuert wird. Mittels einer Detektionseinrichtung 102 in der Antriebseinheit 3 des Pedelec kann das erzeugte Feld, hier ein Magnetfeld 200, gemessen werden. In der unteren Hälfte der Figur 4 sind zwei Diagramme 300, 400 gezeigt, wobei das Diagramm 300 die Feldstärke 301, 302 des Magnetfelds 200 gemessen über die Zeit durch die Detektionseinrichtung 102 wiedergibt. Das Diagramm 400 zeigt das Steuersignal 401 der Felderzeugungseinheit 101 für das Felderzeugungselement 101' zur Erzeugung des Magnetfelds 200 mit Verlauf 302 über die Zeit.

Das System 100, welches als ein Geschwindigkeitsemulator für das Fahrrad 1 angesehen werden kann, kann hinsichtlich seiner Einzelkomponenten Detektionseinrichtung 102 und Ermittlungseinrichtung 103 unterschiedliche Verbaupositionen aufweisen, beispielsweise am Fahrradrahmen 6, am Ausfallende, an der Antriebseinheit 3, insbesondere unter einer Abdeckung, sodass das System 100 zumindest teilweise nicht von außen sichtbar ist, zwischen Antriebseinheit 3 und Hinterrad 2 oder dergleichen. Die Felderzeugungseinheit 101 des Systems kann unterschiedliche Verbaupositionen an einem rotierenden Bauteil des Fahrrads 1 aufweisen, beispielsweise auf oder in einer Felge, an einer Speiche, an einer Nabe eines Rades oder dergleichen.

Das Prinzip beziehungsweise die Funktion der Felderzeugungseinheit 101 ist jedoch für die unterschiedlichen Verbaupositionen im Wesentlichen gleich: Magnetfeldgebende Elemente oder allgemein Felderzeugungselemente 101', wie beispielsweise ein oder mehrere Spulen, ein oder mehrere stromdurchflossene Leiter, ein oder mehrere zweidimensional wirkende Spulen, ein oder mehrere dreidimensional wirkende Spulen, ein oder mehrere rotierende Magneten , ein Elektromotor, etc. emulieren und stellen Magnetfelder bereit, welche einem oder mehreren bisher bekannten im Laufrad des Fahrrads 1 mitrotierenden Permanentmagneten ähneln.

Die insbesondere an einem Laufrad des Fahrrads 1 angeordnete Felderzeugungseinheit 101 erzeugt mittels einem oder mehreren Felderzeugungselementen 101' beispielsweise ein Magnetfeld, welches von einem in der Antriebseinheit 3 des Fahrrads 1 angeordneten Sensor, beispielsweise einem Magnetfeldsensor einer Detektionseinrichtung 102 gemessen wird. Bei der Rotation des Laufrads ändert sich das vom Sensor gemessene Magnetfeld, da sich die Entfernung des zumindest einen Felderzeugungselements 101' vom Sensor der Detektionseinrichtung 102 sowie die Richtung des Magnetfelds während und auf Grund der Radumdrehung ändern.

Die Felderzeugungseinheit 101 ist so ausgebildet, dass diese das zumindest eine Felderzeugungselement 101' so ansteuert, dass das mit diesem erzeugte Magnetfeld dem eines bisher bekannten Permanentmagneten möglichst stark ähnelt. Für den hier in der Antriebseinheit 3 des Fahrrads 1 angeordneten Sensor der Detektionseinrichtung 102 ist somit das während einer Radumdrehung gemessene Signal, welches gegebenenfalls in zwei oder drei Raumachsen gemessen wird, nicht von dem des rotierenden bisher bekannten und verwendeten Permanentmagneten zu unterscheiden.

Üblicherweise ist die Reichweite der Detektionseinrichtung 102, insbesondere des Magnetfeldsensors, begrenzt. Insbesondere reichen die Feldstärke des Magneten und/oder die Messempfindlichkeit der Detektionseinrichtung 102 nicht aus, um das Magnetfeld 200 jedes Felderzeugungselements 101' während einer kompletten Radumdrehung zu erfassen. Mit anderen Worten erfasst der Sensor das Magnetfeld des Felderzeugungselements 101' erst bei dessen Annäherung an die Antriebseinheit 3 und kann dessen Magnetfeld nach Passieren des Sensors in der Antriebseinheit 3 nicht mehr detektieren.

Um die ermittelte Geschwindigkeit, beispielsweise zu Testzwecken, verändern zu können, wird das Felderzeugungselement 101' auf die folgenden Arten angesteuert:
- Eine permanente gleichartige Ansteuerung mittels eines Signals 301 kann dazu führen, dass die tatsächliche Fahrgeschwindigkeit erfasst wird.
- Eine Zuschaltung beziehungsweise Bereitstellung des Magnetfelds 200, genauer bei jeder zweiten Radumdrehung (Signal 302) durch ein Steuersignal 401 führt dazu, dass sich die gemessene Geschwindigkeit um Faktor 2 reduziert. Durch eine Zuschaltung bei jeder n-ten Radumdrehung, lässt sich die gemessene Geschwindigkeit folglich um den Faktor n reduzieren.

Soll eine Geschwindigkeit zu Testzwecken emuliert werden, die höher ist als die reale vorliegende Geschwindigkeit, werden zwei oder mehr magnetfeldgebende Elemente beziehungsweise das Felderzeugungselement 101' am Laufrad angeordnet. Diese können insbesondere in regelmäßigen Abständen angeordnet werden, um bei konstanter Fahrt eine gleichmäßige Geschwindigkeit emulieren zu können.

Die Ansteuerung des einen oder der mehreren Felderzeugungselemente 101' kann mittels einer Ansteuerlogik erfolgen. Damit die Geschwindigkeit emuliert werden kann, kann insbesondere der Zeitpunkt des Zu- und Abschaltens des Felderzeugungselements 101' geeignet gesteuert werden. Die Schaltzeitpunkte liegen insbesondere in dem Bereich, in dem das jeweilige Felderzeugungselement 101' für den Sensor nicht "sichtbar" ist. Diese Zeitpunkte sind insbesondere abhängig von der Radposition und/oder Raddrehzahl und können durch eine geeignete Sensorik bestimmt werden. Eine geeignete Sensorik umfasst dabei beispielsweise eine Inertialsensorik, umfassend einen Beschleunigungssensor zur Messung des Gravitationsvektors oder der Zentrifugalbeschleunigung und ein Gyroskop zur Messung der Drehgeschwindigkeit, eine Magnetfeldsensorik zur Messung des rotierenden Erdmagnetfelds, einen Reed-Schalter, beispielsweise mit einem am Fahrradrahmen montiertem Magneten oder eine GPS-Einheit oder dergleichen.

Insgesamt können sämtliche Einrichtungen und/oder Einheiten des Systems 100 eine eigene Stromversorgung aufweisen oder gemeinsam und/oder einzeln mit einer Stromversorgung des Fahrrads 1 verbunden sein.

Zusammenfassend kann zumindest eine Ausführungsform der vorliegenden Erfindung zumindest einen der folgenden Vorteile und/oder zumindest eines der folgenden Merkmale bereitstellen:
- Bereitstellung eines Geschwindigkeitsemulators, welcher an einem beweglichen Bauteil angeordnet ist.
- Temporär magnetfeldgebende Elemente, beispielsweise ansteuerbare Spulen.
- Eine Spannungsversorgung, insbesondere eine eigene Versorgung der Einheiten und/oder Einrichtungen oder eine vom Fahrrad bereitgestellte Spannungsversorgung der Einheiten und/oder Einrichtungen.
- Vorzugsweise ein eigenes Geschwindigkeitsmesssystem des Systems.
- Geschwindigkeitsvorgabe für ein Fahrrad, welche von der tatsächlichen Fahrgeschwindigkeit losgelöst ist in Form von emulierten, kontinuierlichen und temporär emittierten Magnetfeldern.
- Hohe Flexibilität.
- Einfachere Überprüfung von Funktionen des Fahrrads.
- Anpassung des Signals auf dem physikalischen Wirkpfad hinsichtlich der Geschwindigkeitsvorgabe unabhängig von der tatsächlichen Fahrgeschwindigkeit des Fahrrads.
- Beeinflussung eines gemessenen Signals zur Ermittlung der Geschwindigkeit auch bei Messung von kontinuierlichen Werten von einem Sensor - im Gegensatz zu dem bisher bekannten Reed-Sensor mit Reed-Signal, welches nur die Werte 0 und 1 aufweist.

Obwohl die vorliegende Erfindung anhand bevorzugter Ausführungsbeispiele beschrieben wurde, ist sie nicht darauf beschränkt, sondern auf vielfältige Weise modifizierbar.

## Patentansprüche

1. Verfahren zum Beeinflussen eines Ermittelns einer Geschwindigkeit eines Fahrrads (1) mit zumindest zwei Rädern (2, 7), insbesondere eines Pedelecs, wobei ein Bereitstellen (S1) eines zeitlich und/oder räumlich variierenden elektrischen und/oder magnetischen Feldes durch eine Felderzeugungseinheit (101) an zumindest einer Detektionsposition an einem starren Bauteil des Fahrrads (1) zur Ermittlung der Geschwindigkeit des Fahrrads (1) erfolgt, wobei die Felderzeugungseinheit (101) zumindest ein Felderzeugungselement (101') aufweist, dessen bereitgestelltes elektrisches und/oder magnetisches Feld derart durch eine Ansteuerung der Felderzeugungseinheit (101) verändert wird, dass eine von der tatsächlichen Geschwindigkeit des Fahrrads (1) abweichende Geschwindigkeit ermittelt wird, wobei die Felderzeugungseinheit (101) an einem beweglichen, insbesondere rotierenden Bauteil des Fahrrads (1) angeordnet wird, wobei zum Emulieren einer geringeren Geschwindigkeit das zumindest eine Felderzeugungselement (101') so angesteuert wird, dass dieses nur bei jeder n-ten Umdrehung aktiviert wird und/oder wobei zum Emulieren einer höheren Geschwindigkeit zumindest ein weiteres Felderzeugungselement temporär aktiviert wird.

2. Verfahren gemäß Anspruch 1, wobei die Geschwindigkeit des Fahrrads (1) durch die Bewegung, insbesondere die Rotation des Bauteils zumindest mittelbar repräsentiert wird.

3. Verfahren gemäß Anspruch 2, wobei die Felderzeugungseinheit (101) das zumindest eine Felderzeugungselement (101') derart ansteuert, sodass temporär, insbesondere regelmäßig ein zeitlich unveränderliches Magnetfeld, insbesondere das eines Permanentmagneten bereitgestellt wird.

4. Verfahren gemäß einem der vorhergehenden Ansprüche, wobei die Felderzeugungseinheit (101) mit zumindest zwei Felderzeugungselementen (101') versehen wird, die insbesondere an dem beweglichen, insbesondere rotierenden Bauteil des Fahrrads (1) angeordnet werden.

5. Verfahren gemäß einem der Ansprüche 1-4, wobei das zumindest eine Felderzeugungselement (101') derart angesteuert wird, sodass eine ermittelte Geschwindigkeit niedriger ist als diejenige, die bei Bereitstellung eines Feldes eines zeitlich unveränderlichen Magnetfeldes durch das Felderzeugungselement (101') ermittelt wird.

6. Verfahren gemäß einem der Ansprüche 1-5, wobei mehrere Felderzeugungselemente (101') angeordnet werden und diese derart angesteuert werden, sodass eine ermittelte Geschwindigkeit höher ist als diejenige, die bei Bereitstellung eines Feldes eines zeitlich unveränderlichen Magnetfeldes durch lediglich eines der mehreren Felderzeugungselemente (101') ermittelt wird.

7. Verfahren gemäß Anspruch 6, wobei die mehreren Felderzeugungselemente (101') in regelmäßiger Weise an einem beweglichen, insbesondere rotierenden Bauteil des Fahrrads (1) angeordnet werden.

8. Verfahren gemäß einem der Ansprüche 1-7, wobei die Felderzeugungseinheit (101) das zumindest eine Felderzeugungselement (101') derart ansteuert, sodass eine Änderung des Feldes zu einem Zeitpunkt, bereitgestellt durch das zumindest eine Felderzeugungselement (101'), außerhalb der Reichweite des zumindest einen Sensors erfolgt, wobei eine Messeinrichtung zur Bestimmung des Zeitpunkts angeordnet wird, insbesondere eine Inertialmesseinheit, eine Erdmagnetfeldmesseinheit, ein Reed-Schalter mit an einem starren Bauteil des Fahrrads (1) angeordnetem Magneten und/oder eine GPS-Einheit.

9. Beeinflussungsvorrichtung zum Beeinflussen eines Ermittelns einer Geschwindigkeit eines Fahrrads (1) mit zumindest zwei Rädern (2, 7), insbesondere eines Pedelecs, umfassend eine Felderzeugungseinheit (101), die ausgebildet ist, ein zeitlich und/oder räumlich variierendes elektrisches und/oder magnetisches Feld an zumindest einer Detektionsposition an einem starren Bauteil des Fahrrads (1) zur Ermittlung der Geschwindigkeit des Fahrrads (1) bereitzustellen, wobei die Felderzeugungseinheit (101) zumindest ein Felderzeugungselement (101') aufweist, dessen bereitgestelltes elektrisches und/oder magnetisches Feld durch eine Ansteuerung der Felderzeugungseinheit (101) veränderbar und so ansteuerbar ist, dass eine von der tatsächlichen Geschwindigkeit des Fahrrads abweichende Geschwindigkeit ermittelt wird, wobei die Felderzeugungseinheit (101) an einem beweglichen, insbesondere rotierenden Bauteil des Fahrrads (1) anordenbar ausgebildet ist, wobei zum Emulieren einer geringeren Geschwindigkeit das zumindest eine Felderzeugungselement (101') so angesteuert wird, dass dieses nur bei jeder n-ten Umdrehung aktiviert wird und/oder wobei zum Emulieren einer höheren Geschwindigkeit zumindest ein weiteres Felderzeugungselement temporär aktiviert wird.

10. Fahrrad (1) mit einer Beeinflussungsvorrichtung gemäß dem vorhergehenden Anspruch, insbesondere wobei die Beeinflussungsvorrichtung an einem beweglichen, insbesondere rotierenden Bauteil des Fahrrads (1) angeordnet ist, vorzugsweise an einem Rad (2, 7) des Fahrrads (1).

## Claims

1. Method for influencing a determination of a speed of a bicycle (1) having at least two wheels (2, 7), in particular a pedelec, wherein an electrical and/or magnetic field that varies in time and/or space is provided (S1) by a field generation unit (101) at at least one detection position on a rigid component of the bicycle (1) for the purpose of determining the speed of the bicycle (1), the field generation unit (101) having at least one field generation element **(101')** whose provided electrical and/or magnetic field is altered in such a way by control of the field generation unit (101) that a speed that differs from the actual speed of the bicycle (1) is determined, the field generation unit (101) being arranged on a mobile, in particular rotating, component of the bicycle (1), wherein a lower speed is emulated by controlling the at least one field generation element (101') such that it is activated only on every n-th revolution and/or wherein a higher speed is emulated by temporarily activating at least one further field generation element.

2. Method according to Claim 1, wherein the speed of the bicycle (1) is at least indirectly represented by the movement, in particular the rotation, of the component.

3. Method according to Claim 2, wherein the field generation unit (101) controls the at least one field generation element (101') in such a way that a temporally invariable magnetic field, in particular that of a permanent magnet, is temporarily, in particular regularly, provided.

4. Method according to one of the preceding claims, wherein the field generation unit (101) is provided with at least two field generation elements (101'), which are in particular arranged on the mobile, in particular rotating, component of the bicycle (1).

5. Method according to one of Claims 1-4, wherein the at least one field generation element (101') is controlled in such a way that a determined speed is lower than that which is determined when a field of a temporally invariable magnetic field is provided by the field generation element (101').

6. Method according to one of Claims 1-5, wherein multiple field generation elements (101') are arranged and said field generation elements are controlled in such a way that a determined speed is higher than that which is determined when a field of a temporally invariable magnetic field is provided by only one of the multiple field generation elements (101').

7. Method according to Claim 6, wherein the multiple field generation elements (101') are arranged on a mobile, in particular rotating, component of the bicycle (1) in a regular manner.

8. Method according to one of Claims 1-7, wherein the field generation unit (101) controls the at least one field generation element (101') in such a way that a change in the field at one time, provided by the at least one field generation element (101'), takes place outside the range of the at least one sensor, wherein a measuring device for determining the time is arranged, in particular an inertial measurement unit, an Earth's magnetic field measurement unit, a reed switch with magnets arranged on a rigid component of the bicycle (1), and/or a GPS unit.

9. Influencing device for influencing a determination of a speed of a bicycle (1) having at least two wheels (2, 7), in particular a pedelec, comprising a field generation unit (101) that is designed to provide an electrical and/or magnetic field that varies in time and/or space at at least one detection position on a rigid component of the bicycle (1) for the purpose of determining the speed of the bicycle (1), the field generation unit (101) having at least one field generation element (101') whose provided electrical and/or magnetic field is alterable by control of the field generation unit (101) and controllable such that a speed that differs from the actual speed of the bicycle is determined, the field generation unit (101) being designed to be arrangeable on a mobile, in particular rotating, component of the bicycle (1), wherein a lower speed is emulated by controlling the at least one field generation element (101') such that it is activated only on every n-th revolution and/or wherein a higher speed is emulated by temporarily activating at least one further field generation element.

10. Bicycle (1) having an influencing device according to the preceding claim, the influencing device in particular being arranged on a mobile, in particular rotating, component of the bicycle (1), preferably on a wheel (2, 7) of the bicycle (1).

## Revendications

1. Procédé pour influencer une détermination de la vitesse d'un vélo (1) ayant au moins deux roues (2, 7), en particulier d'un vélo à assistance électrique, dans lequel un champ électrique et/ou magnétique variant dans le temps et/ou dans l'espace est généré par un dispositif (101) de génération de champ en au moins une position de détection sur un composant rigide du vélo (1) pour déterminer la vitesse du vélo (1), le dispositif (101) de génération de champ comprenant au moins un élément (101') de génération de champ, dont le champ électrique et/ou magnétique fourni est modifié par une commande du dispositif (101) de génération de champ de telle sorte qu'une vitesse différente de la vitesse réelle du vélo (1) est déterminée, le dispositif (101) de génération de champ étant disposée sur un composant mobile, en particulier rotatif, du vélo (1) ; pour émuler une vitesse plus faible, ledit au moins un élément (101') de génération de champ est commandé de telle sorte qu'il n'est activé qu'à chaque n-ième tour et/ou dans lequel, pour émuler une vitesse plus élevée, au moins un autre élément de génération de champ est activé temporairement.

2. Procédé selon la revendication 1, dans lequel la vitesse du vélo (1) est représentée au moins indirectement par le mouvement, en particulier la rotation de l'élément.

3. Procédé selon la revendication 2, dans lequel le dispositif (101) de génération de champ commande ledit au moins un élément (101') de génération de champ de telle sorte qu'un champ magnétique invariable dans le temps, en particulier celui d'un aimant permanent, soit fourni temporairement, en particulier de façon régulièrement.

4. Procédé selon l'une des revendications précédentes, dans lequel le dispositif (101) de génération de champ est pourvue d'au moins deux éléments (101') de génération de champ, qui sont disposés en particulier sur l'élément mobile, en particulier rotatif, du vélo (1).

5. Procédé selon l'une des revendications 1 à 4, dans lequel ledit au moins un élément (101') de génération de champ est commandé de telle sorte qu'une vitesse déterminée soit inférieure à celle qui est déterminée lorsque l'élément (101') de génération de champ fournit un champ magnétique constant dans le temps.

6. Procédé selon l'une des revendications 1 à 5, dans lequel plusieurs éléments (101') de génération de champ sont agencés et commandés de telle sorte qu'une vitesse déterminée est supérieure à celle qui est déterminée lors de la fourniture d'un champ magnétique invariable dans le temps par un seul des éléments (101') de génération de champ.

7. Procédé selon la revendication 6, dans lequel lesdits plusieurs éléments (101') de génération de champ sont disposés de manière régulière sur un composant mobile, en particulier rotatif, du vélo (1).

8. Procédé selon l'une des revendications 1 à 7, dans lequel le dispositif (101) de génération de champ commande ledit au moins un élément (101') de génération de champ de telle sorte qu'une modification du champ à un moment donné, fournie par ledit au moins un élément (101') de génération de champ, se produit en dehors de la portée dudit au moins un capteur, un dispositif de mesure étant agencé de façon à déterminer le moment, en particulier une unité de mesure inertielle, une unité de mesure du champ magnétique terrestre, un commutateur à lames souples avec un aimant disposé sur un composant rigide du vélo (1) et/ou une unité GPS.

9. Dispositif d'influence pour influencer une détermination d'une vitesse d'un vélo (1) comprenant au moins deux roues (2, 7), en particulier un vélo à assistance électrique, comprenant un dispositif (101) de génération de champ qui est conçu pour fournir un champ électrique et/ou magnétique variant dans le temps et/ou dans l'espace en au moins une position de détection sur un composant rigide du vélo (1) afin de déterminer la vitesse du vélo (1), le dispositif (101) de génération de champ comprenant au moins un élément (101') de génération de champ dont le champ électrique et/ou magnétique fourni est modifiable par une commande du dispositif (101) de génération de champ et peut être commandé de telle sorte qu'une vitesse différente de la vitesse réelle du vélo soit déterminée, le dispositif (101) de génération de champ étant conçu de façon à être placé sur un composant mobile, en particulier rotatif, du vélo (1), ledit au moins un élément (101') de génération de champ étant commandé de telle manière qu'il ne soit activé qu'à chaque n-ième tour afin d'émuler une vitesse plus faible, et/ou au moins un autre élément de génération de champ étant activé temporairement pour émuler une vitesse plus élevée.

10. Vélo (1) comprenant un dispositif d'influence selon la revendication précédente, en particulier dans lequel le dispositif d'influence est disposé sur un composant mobile, en particulier rotatif, du vélo (1), de préférence sur une roue (2, 7) du vélo (1).
